Europäisches Patentamt

European Patent Office

Office européen des brevets

(11) **EP 1 515 152 A1**

(19)

(12) **EUROPÄISCHE PATENTANMELDUNG**

(43) Veröffentlichungstag:
**16.03.2005 Patentblatt 2005/11**

(51) Int Cl.$^7$: **G01S 3/784**, G01C 15/00

(21) Anmeldenummer: **03020734.4**

(22) Anmeldetag: **12.09.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **Leica Geosystems AG**
**9435 Heerbrugg (CH)**

(72) Erfinder:
• **Kirschner, Holger, Dr.**
**9435 Heerbrugg (CH)**

• **Graf, Roland**
**9033 Untereggen (CH)**

(74) Vertreter: **Kaminski, Susanne, Dr.**
**Büchel, Kaminski & Partner**
**Patentanwälte Est.**
**Austrasse 79**
**9490 Vaduz (LI)**

(54) **Verfahren zur Richtungsbestimmung zu einem zu vermessenden Objekt**

(57) Zum Zweck der Richtungsmessung zu einem Objekt, dessen weitere Vermessung erfolgen soll, wird durch einen Bildsensor ein Bild (4) mit einem Muster (6) des Objekts aufgenommen. Um hierbei eine erhöhte Messfrequenz und damit auch eine Zielverfolgung schnell bewegter Objekte zu ermöglichen, werden die verfügbaren Bildinformationen nur teilweise für die Richtungsbestimmung berücksichtigt. Durch eine Auswahl nur eines Teilbereichs (7b) des Bildes (4) wird die zu nutzende Bildinformation reduziert. In einem weiteren oder alternativen Ansatz kann innerhalb des Bildes (4) oder des Teilbereichs (7b) eine Auswahl auszulesender Bildpunkte durch eine gezielte Auslassung getroffen werden.

Fig. 5

**Beschreibung**

Die Erfindung betrifft ein Verfahren zur Richtungsbestimmung zu einem zu vermessenden Objekt nach Anspruch 1, ein Computerprogrammprodukt nach Anspruch 10 sowie ein Computer-Daten-Signal nach Anspruch 11.

In vielen geodätischen Aufgabenstellungen bzw. Anwendungen soll von einem Detektionspunkt aus die Richtung zu einem Objektpunkt bestimmt werden, wie z.B. der Azimut- und Elevationswinkel zu einem weiteren Referenzpunkt oder der Kompassrichtung. Solche Problemstellungen sind klassische Aufgaben der Geodäsie.

Um einen Objektpunkt bzw. ein zu vermessendes Objekt erfassbar und vermessbar zu gestalten, wird dieser Objektpunkt gegenüber anderen Punkten des Raumes ausgezeichnet, z.B. indem von diesem aktiv Strahlung ausgesendet wird.

Eine andere Möglichkeit der Objektpunktauszeichnung ist die Erhöhung der gerichteten Reflektivität im Objektpunkt beispielsweise durch Anbringen eines oder mehrerer Reflektoren, z.B. einem Cornercube mit dessen Inversionszentrum auf dem Punkt oder in definierter Umgebung des Punktes.

Ein weiteres Beispiel für die Auszeichnung eines Objektpunktes ist seine Definition als Position relativ zu einer bekannten Objektform, wie z.B. einer Zieltafel oder bzgl. von Kante/Ecke/Mitte/Schwerpunkt eines Objekts.

Vom Detektionspunkt aus wird ein definiertes Raumwinkelelement bzw. Detektorgesichtsfeld, welches den Objektpunkt enthält oder enthalten soll, von einem Sensor erfasst und aufgenommen, so dass eine Überwachung möglich ist. Befindet sich der Objektpunkt innerhalb des überwachten Raumwinkelelements, so führt die Objektpunktauszeichnung vermöge einer Abbildung zu einem Muster auf dem Sensor. Dieses für das Objekt spezifische Muster wird auf dem Detektor in richtungsabhängiger Weise mit einer bestimmten Lage oder Position abgebildet. Diese Position des spezifischen Musters auf dem Sensor ermöglicht eine Berechnung der Richtung des Objektpunktes relativ zum Detektionspunkt, wobei ggf. noch Zusatzinformationen einbezogen werden können.

Ein Beispiel für eine solche, zur Richtungsbestimmung verwendbare Abbildung ist die fokussierte Abbildung des Objektpunktes und seiner definierten Umgebung auf einen Position-Sensitive-Device (PSD) oder Bildsensor unter Verwendung eines Objektivs oder einer diffraktiven Optik. Ein anderes Beispiel ist die Abbildung mit Fokus unendlich, welche empfangene Objektstrahlen direkt eine richtungsabhängige Position auf dem Sensor zuordnet. In diesem Beispiel wird die von einem Objektpunkt ausgehende divergente Strahlung zu einem näherungsweise zirkularsymmetrischen Muster auf dem Sensor abgebildet.

Die Position des Musters wird vom Sensor bzw. einer Auswerteelektronik bestimmt und in die gesuchte Richtung des Objektpunktes relativ zum Detektionspunkt umgerechnet, wobei ggf. Zusatzinformationen über Objekteigenschaften, Objektabstand und Detektor-eigenschaften verwendet werden können.

Als ein geeigneter Sensor, welcher die Positionsbestimmung ermöglicht, kann zum Beispiel ein PSD als Einzelsensor oder ein Bildsensor als Matrix von Einzelsensoren, sog. Pixel oder Bildpunkten, verwendet werden. Letzterer hat den Vorteil, dass sich eventuell störendes Fremdlicht auf die Einzelsensoren bzw. Bildpunkte des Bildsensors verteilt und damit die Auslastung der Dynamik des Sensors sowie das Signal/Hintergrund Verhältnis günstiger ist als bei der Verwendung nur eines Einzelsensors.

Ein Nachteil bei der Verwendung von Bildsensoren ist jedoch der erheblich erhöhte Zeitbedarf zum Auslesen und Auswerten der Bildpunkte im Vergleich zur Verwendung nur eines Einzelsensors. Zum Beispiel benötigt ein VGA Bildsensor mit 640x480 Bildpunkten einen 307200-mal höheren Zeitbedarf im Vergleich zur Verwendung eines Einzelsensors.

Bei der Richtungsbestimmung zu einem Objekt oder einem Objektpunkt ergeben sich bei der - aus Gründen der Stabilität gegenüber Störstrahlung vorteilhaften - Verwendung von Flächensensoren Probleme aufgrund des erhöhten Zeitbedarfs zum Auslesen und Verarbeiten des Sensorsignals, so dass eine vergleichsweise geringe Messfrequenz der Richtungsbestimmung resultiert.

Dabei kann die Richtungsbestimmung je nach Anwendung in zwei Aufgabenstellungen unterteilt werden:

Statische Messaufgabe - Hierbei ist der Objektpunkt unbeweglich oder hat eine bezüglich Sollgenauigkeit und Messfrequenz der Richtungsbestimmung vernachlässigbare Veränderung der Richtung zum Detektor.

Dynamische Messaufgabe - Hierbei ist die Veränderung der Richtung vom Objektpunkt zum Detektor nicht vernachlässigbar. Bei der dynamischen Messaufgabe kommt es zu Problemen, wenn die Veränderung der Richtung zum Objektpunkt während der Messauswertung so gross ist, dass der Objektpunkt bei der darauffolgenden Messung ausserhalb des Detektorgesichtsfeldes gerät. In diesem Fall wird eine, evtl. auch automatisch durchgeführte Nachführung des Gesichtsfeldes erschwert. Unter ungünstigen Umständen kann eine auf der Richtungsmessung basierende Nachführung mit dem Ziel einer erneuten Erfassung des Objektpunktes nicht mehr durchgeführt werden, so dass die dynamische Messaufgabe unter Umständen abgebrochen werden muss. Ein Spezialfall der dynamischen Messaufgabe betrachtet Messgenauigkeiten, welche grösser oder gleich dem Detektorgesichtsfeldwinkel sind. Damit besteht die Messaufgabe nur mehr in der Entscheidung bzw. Verifikation, dass der Objektpunkt innerhalb des Sensorgesichtfeldes ist. Eine - ggf. angepasst - hohe Messfrequenz führt zu einer höheren Toleranz der Regelung gegenüber schnellen Richtungsänderungen und ist damit auch in diesem Spezialfall von Vorteil.

Hohe Messfrequenzen sind auch bei der statischen Messaufgabe günstig, da bei der schnellen Messung innerhalb der von der Anwendung bestimmten Zeit mehrere Einzelmessungen gemittelt werden können und damit eine Erhöhung der Messgenauigkeit möglich wird. Ausserdem kommt es bei einer Störung der Messung durch turbulente Luftströmungen (Wärmeschlieren) zu kurzzeitigen starken Störungen, welche bei schneller Messung eliminiert werden können.

Eine Aufgabe der vorliegenden Erfindung besteht darin, ein Verfahren bereitzustellen, das eine Richtungsbestimmung mit hohen Messfrequenzen ermöglicht.

Eine weitere Aufgabe der vorliegenden Erfindung liegt in der Ermöglichung einer auf einer Richtungsmessung basierenden Nachführung auch bei grösseren Winkelgeschwindigkeiten bzw. Winkelbeschleunigungen von zu erfassenden Objekten.

Eine weitere Aufgabe der vorliegenden Erfindung besteht in der Bereitstellung eines Verfahrens, das kurzzeitige Störungen bei der Richtungsmessung eliminieren oder zumindest unterdrücken kann.

Diese Aufgaben werden erfindungsgemäss durch Merkmale des Anspruchs 1 oder durch Merkmale der Unteransprüche gelöst bzw. weitergebildet.

Die Erfindung betrifft ein Verfahren zur Richtungsbestimmung zu einem Objektpunkt, wobei aus Gründen der Fremdlichtstabilität ein Bildsensor bzw. ein Array von Einzelsensoren verwendet wird.

Bei speziellen Typen von Bildsensoren, wie z.B. CMOS-Bildsensoren, ist es möglich, auf einzelne Bildpunkte oder Pixel direkt zuzugreifen. Solche Bildsensoren erlauben einerseits die Einschränkung des - z.B. quadratischen - ausgewerteten Bildfeldes des Sensors in Form eines sog. "Subwindowings". Verbunden mit der Verringerung der Zahl von ausgelesenen Pixeln ist eine kürzere Zeit beim Auslesen und Nachverarbeiten der Pixeldaten.

Zum anderen kann ein Zeitgewinn bei solchen Sensoren auch durch ein sogenanntes "Subsampling" erreicht werden. Es handelt sich dabei um das Auslesen von beispielsweise nur jeder 2. (3.,4., ...) Spalte und/oder nur jeder 2. (3.,4., ...) Zeile des Bild-Sensorarrays. Welche Kombination von Subsampling und Subwindowing für die jeweilige Messanwendung ideal ist, hängt von den Details oder Parametern der jeweiligen Messaufgabe ab. Im Folgenden wird das Auslesen von nur jeder N-ten Spalte (bzw. N-ten Zeile) als N-fach Spaltensubsampling (N-fach Zeilensubsampling) bezeichnet.

In beiden Fällen wird von der über den Bildsensor aufgenommenen Bildinformation nur eine Teilmenge verwendet. Diese besteht im einfachsten Fall aus der Auswahl einer Teilmenge der Bildpunkte, deren Inhalt ausgelesen wird. Es können jedoch auch Aggregate mehrerer Bildpunkte, z.B. in Form der Zusammenfassung zu Überstrukturen von Pixeln gebildet werden.

In einem der eigentlichen Richtungsmessung vorgeschalteten Schritt können die Bedingungen bzw. Parameter der Bildaufnahme und Bildauswertung festgelegt werden. Dabei wird anhand von Objektgrösse, Objektabstand und/oder gewünschter Messgenauigkeit entschieden ob/und welches Spaltensubsampling und ob/und welches Zeilensubsampling durchgeführt werden kann. Hierbei soll die Position des spezifischen Musters, welche die Berechnung der Richtung zum Objektpunkt erlaubt, auch mit Subsampling hinreichend genau bestimmbar sein. Dies gilt insbesondere, wenn das Muster durch eine fokussierte Abbildung einer komplexen Objektpunktumgebung generiert wird. Die Position des Bildes einer Messmarke auf dem Sensor ist nur hinreichend genau zu extrahieren, wenn dieses Bild eine - abhängig von der Komplexität der Markierung - grössere Anzahl von Pixel beinhaltet. Ein Beispiel für eine Abschätzung der Messgenauigkeit für einfache Muster ist im Folgenden skizziert, wobei die Darstellung nur für die Zeilenrichtung des Sensors erfolgt. Die Vorgehensweise bei Spaltenrichtung erfolgt analog.

Das Muster enthält in horizontaler (Zeilen-) Richtung des Sensors $N_T$ erkennbare Positionen. Dies sind typischerweise Hell-Dunkel- oder Dunkel-Hell-Übergänge. Weiterhin liegen die erkennbaren Positionen zumeist auf dem Rand des Musters, d.h. die erkennbaren Positionen sind häufig nicht Teil der Textur des Musters.

Aus Objektgrösse und Objektabstand lässt sich die Grösse des Musters auf dem Sensor berechnen. Sind die erkennbaren Positionen des Musters nicht am Pixelraster orientiert, was für praktische Anwendungen kaum eine Einschränkung ist, lässt sich damit die Anzahl der Pixel auf dessen Rand abschätzen und somit $N_T$ bestimmen. Für den Fehler der Positionsbestimmung $E_P$ des Musters ergibt sich folgende Proportionalitätsbeziehung:

$$E_P \propto \frac{G}{\sqrt{N_T}} \tag{1}$$

wobei G die insensitive Lücke zwischen zwei Pixeln spezifiziert. Dazu muss noch der Fehler berücksichtigt werden, welcher aus dem Signalrauschen resultiert.

Ohne ein Subsampling ist G der Abstand zwischen den sensitiven Flächen benachbarter Pixel, woraus für G>0 ein Füllfaktor <1 resultiert. Mit einem Subsampling kommt zu diesem Bildpunktabstand noch die Fläche der nicht ausgelesenen Pixel zwischen den ausgelesenen Bildpunkten hinzu, wobei das Subsampling auch $N_T$ reduziert.

Der Proportionalitätsfaktor in Gleichung (1) lässt sich für einfache Muster theoretisch herleiten oder anhand von Messungen bestimmen.

Damit lässt sich das N-fach Subsampling mit dem maximalen N bestimmen, welches die gewünschte Messgenauigkeit der Richtungsmessung noch gewährleistet.

Die ideale Wahl des Subwindowings ergibt sich aus der Grösse des Musters, wobei diese auch aus Objektgrösse und Objektdistanz geschätzt werden kann. Bei der gewählten Anzahl von auszulesenden Bildpunkten sollte die zuvor getroffene Auswahl des Subsamplings berücksichtigt werden.

Das Subwindowing wird so gewählt, dass die Lagen der zur Messung notwenigen $N_T$ erkennbaren Positionen des Musters bestimmt werden können. Zudem kann es vorteilhaft sein, das durchs Subwindowing eingeschränkte Gesichtsfeld des Detektors etwas zu erweitern.

Dies ist insbesondere geeignet, um auch mit turbulenten Luftströmungen, Schwankungen der Sensorposition oder Unsicherheiten im Detektorgesichtsfeld sequentielle Folgemessungen durchführen zu können, ohne das Subwindowing erneut anzupassen.

Bei der dynamischen Messaufgabe erfolgt die Wahl des Subsamplings analog zur statischen Messaufgabe. Es wird das N-fach-Subsampling mit dem maximalen N gewählt, welches die Messgenauigkeit noch gewährleistet.

Ist das Subsampling festgelegt, so bestimmt die noch zu treffende Wahl der Detektorgesichtsfeldgrösse (Subwindowing) die Verarbeitungsgeschwindigkeit.

Dabei wird die Gesichtsfeldgrösse so eingestellt, dass eine maximale Winkelbeschleunigung des Objektpunktes, welche zwischen zwei Richtungsmessungen auftritt, toleriert werden kann, d.h. die Gesichtsfeldgrösse wird so gewählt, dass sich trotz der Winkelbeschleunigung der Objektpunkt bei der zweiten Messung noch im Gesichtsfeld des Detektors befindet.

Unter dem Begriff der "geodätischen Vermessung" oder "geodätischen Anwendung" sollen verallgemeinernd stets Messungen bezeichnet werden, die eine Bestimmung oder Überprüfung von Daten mit räumlichem Bezug beinhalten. Insbesondere sollen hier auch alle Anwendungen verstanden werden, die in Zusammenhang mit der Verwendung eines geodätischen Instruments bzw. geodätischen Messgerätes erfolgen. Dies betrifft vor allem Theodoliten und Totalstationen als Tachymeter mit elektronischer Winkelmessung und elektrooptischem Entfernungsmesser. Gleichermassen ist die Erfindung zur Verwendung in spezialisierten Vorrichtungen mit ähnlicher Funktionalität geeignet, z.B. in militärischen Richtkreisen oder in der industriellen Bauwerks- oder Prozessüberwachung bzw. Maschinenpositionierung oder -führung.

Das erfindungsgemässe Verfahren wird nachfolgend anhand von in der Zeichnung schematisch dargestellten Ausführungsbeispielen rein beispielhaft näher beschrieben. Im einzelnen zeigen

Fig.1 die Darstellung einer möglichen Anwendung des Verfahrens zur Vermessung;

Fig.2 die Darstellung der Aufnahme eines Bildes mit einem Muster vermittels eines Bildsensors;

Fig.3 die Darstellung einer ersten erfindungsgemässen Auswahl von Bildinformationen durch ein Subwindowing;

Fig.4 die Darstellung einer zweiten erfindungsgemässen Auswahl von Bildinformationen durch ein Subsampling;

Fig.5 die Darstellung einer dritten erfindungsgemässen Auswahl von Bildinformationen durch eine Kombination von Subwindowing und Subsampling;

Fig.6 die Darstellung der Bedingungen bei einer dynamischen Messaufgabe und

Fig.7 die Darstellung eines Transformationsmodells zur Ableitung einer Richtungsinformation aus der Position eines Musters.

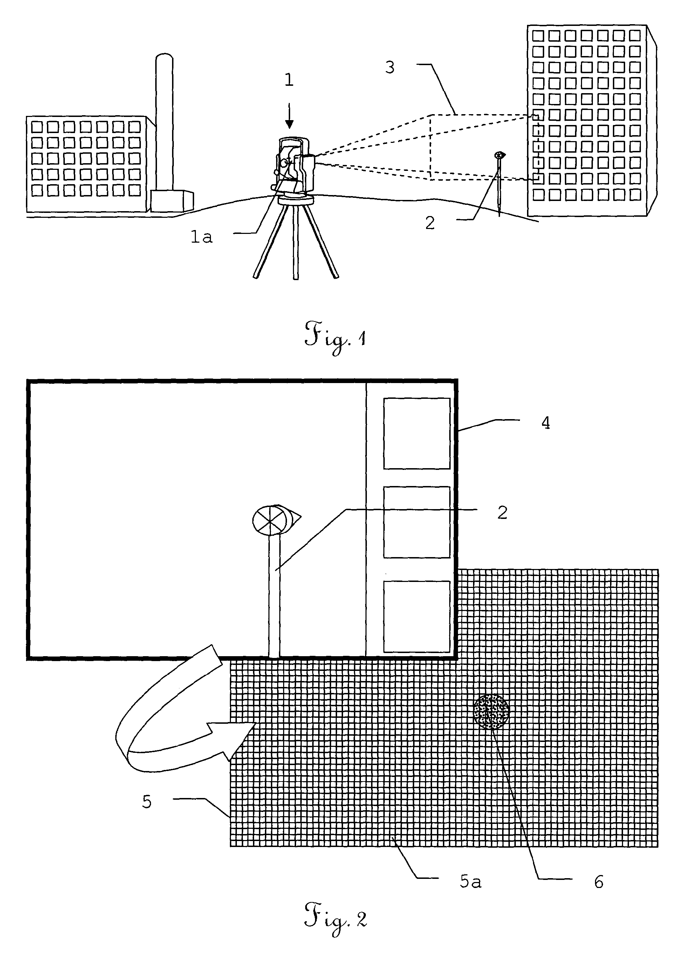

In Fig.1 wird eine mögliche Anwendung des erfindungsgemässen Verfahrens zur Vermessung dargestellt. Durch eine Totalstation als geodätisches Messgerät 1 werden auf einer Baustelle Referenzpunkte vermessen, die durch einen Lotstock mit Reflektor als Objekt 2 erkennbar gekennzeichnet werden. Dabei besitzt der in das Messgerät 1 integrierte Bildsensor 1a ein Sensorgesichtsfeld 3, in dem sich das zu vermessende Objekt 2 befinden soll. Zu diesem Objekt 2 wird die Richtung bestimmt. Das Sensorgesichtsfeld 3 wird in dieser Figur zwar rein beispielhaft rechteckig dargestellt, es kann jedoch auch in anderen Formen ausgebildet sein.

In Fig.2 erfolgt die Darstellung der Aufnahme eines Bildes 4 mit einem Muster 6 vermittels eines Bildsensors. Das vom Bildsensor aufgenommene Bild 4 erfasst das zu vermessende Objekt 2. Sensorseitig wird dieses Bild 4 durch ein Array 5 aus Bildpunkten 5a aufgenommen und in elektronisch auswertbare Signale umgesetzt. Dem zu vermessenden Objekt 2 entspricht dabei ein Muster 6 auf dem Array 5. Dieses Muster 6 und die diesem zugeordneten Bildpunkte können beispielsweise anhand des Übergangs von Hell zu Dunkel identifiziert werden. Allerdings benötigt das Auslesen aller Bildpunkte 5a des Arrays 5 eine gewisse Zeit, welche die erzielbare Frequenz der Bildverarbeitung bestimmt. Zur Bestimmung der Richtung des Objekts 2 genügt es jedoch, die Lage des Musters 6 im Bild 4 bzw. auf dem Array 5 zu kennen, so dass nicht alle Bildpunkte 5a des Arrays 5 in vollem Umfang benötigt werden. Während bei CCD-Kameras stets ein vollständiges Auslesen durch ein Schieberegister erfolgt, kann bei anderen Bautypen, wie z.B. CMOS-Kameras, der einzelne Bildpunkt 5a selektiv ausgelesen werden, so dass eine auf den zur Richtungsbestimmung benötigten Bildinhalt abgestimmte Nutzung realisierbar ist.

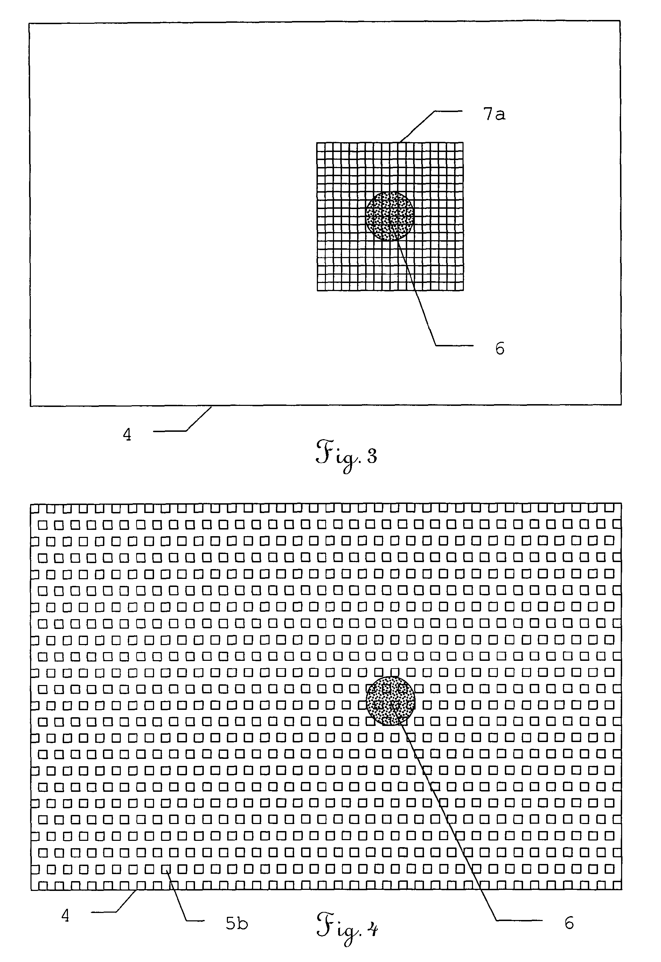

Fig.3 zeigt die Darstellung einer ersten erfindungsgemässen Auswahl von Bildinformationen durch ein Subwindowing. Das Muster 6 des im Bild 4 erfassten Objekts wird durch eine zusammenhängende Teilmenge der Bildpunkte des Bildsensors aufgenommen, wobei diese Teilmenge ein Fenster als Teilbereich 7a des Bildes 4 definiert. Dies bedeutet, dass nur ein Teil des durch das Sensorgesichtsfeld definierten Bildes ausgewertet wird, wobei die Auswertung allerdings im betrachteten Teilbereich 7a alle zur Verfügung stehenden Bildpunkte nutzt. Die Reduktion der genutzten Bildpunkte kann bereits aufnahmeseitig erfolgen, indem nur ein Teil der Bildpunkte überhaupt zur Aufnahme genutzt wird - z.B. aufgrund hardwareseitiger Massnahmen - oder aber bei der Bestimmung der Position des Musters, indem nur ein Teil der grundsätzlich verfügbaren Bildinformation ausgelesen wird.

Fig.4 zeigt die Darstellung einer zweiten erfindungsgemässen Auswahl von Bildinformationen durch ein Subsampling. Bei dieser Ausführungsform werden Bildpunkte 5a nach einem bestimmten Schema von der Nutzung ausgeschlossen, so dass nur der Inhalt einer Teilmenge von Bildpunkten 5a verwendet wird. In diesem Beispiel wird in jeder Zeile nur jeder zweite Bildpunkt 5a genutzt und zusätzlich wird der Inhalt jeder zweiten Zeile vollständig unberücksichtigt gelassen. Ausserdem werden die genutzten Bildpunkte 5a zeilenweise gegeneinander versetzt. Das Muster 6 des im Bild 4 erfassten Objekts wird durch eine Teilmenge der Bildpunkte 5a des Bildsensors aufgenommen, wobei diese Teilmenge das gesamte durch das Sensorgesichtsfeld definierte Bild 4 abdeckt. Dabei werden die prinzipiell zur Verfügung stehenden Bildpunkte 5a nicht vollständig genutzt. Im Vergleich zur Nutzung aller Bildpunkte 5a handelt es sich um eine Aufnahme mit gröberem Raster, das einem Bildsensor mit verringertem Füllfaktor entspricht. Die dargestellte Auswahl von Bildpunkten 5a ist nur ein Beispiel. Es ist erfindungsgemäss eine Fülle weiterer Schemata verwendbar. Insbesondere können auch Auswahlverfahren mit nicht periodischen Folgen oder auch Aggregate von Bildpunkten 5a verwendet werden.

In Fig.5 erfolgt die Darstellung einer dritten erfindungsgemässen Auswahl von Bildinformationen durch eine Kombination von Subwindowing und Subsampling. Bei dieser Auswahl werden die in Fig.3 und Fig.4 dargestellten Ansätze kombiniert, so dass nur ein Teilbereich 7b des Bildes 4 zur Bestimmung der Position des Musters 6 genutzt wird. In diesem Teilbereich 7b werden nicht alle grundsätzlich für eine Auswertung zur Verfügung stehenden Bildpunkte tatsächlich genutzt, sondern es wird nach einem Schema eine Auswahl der Bildpunkte vorgenommen. Diese Auswahl von Bildinformationen verfolgt somit einen zweistufigen Ansatz. Zum einen wird nur ein Teilbereich 7b des Bildes überhaupt genutzt. Zum anderen werden innerhalb dieses Teilbereichs 7b nicht alle verfügbaren Bildpunkte ausgewertet. Erfindungsgemäss können über dieses Beispiel hinaus auch andere Kombinationen von Subwindowing und Subsampling verwendet werden. Insbesondere können auch mehrere Teilbereiche mit unterschiedlicher interner Auswahl genutzt werden, wobei diese Teilbereiche auch überlappen können.

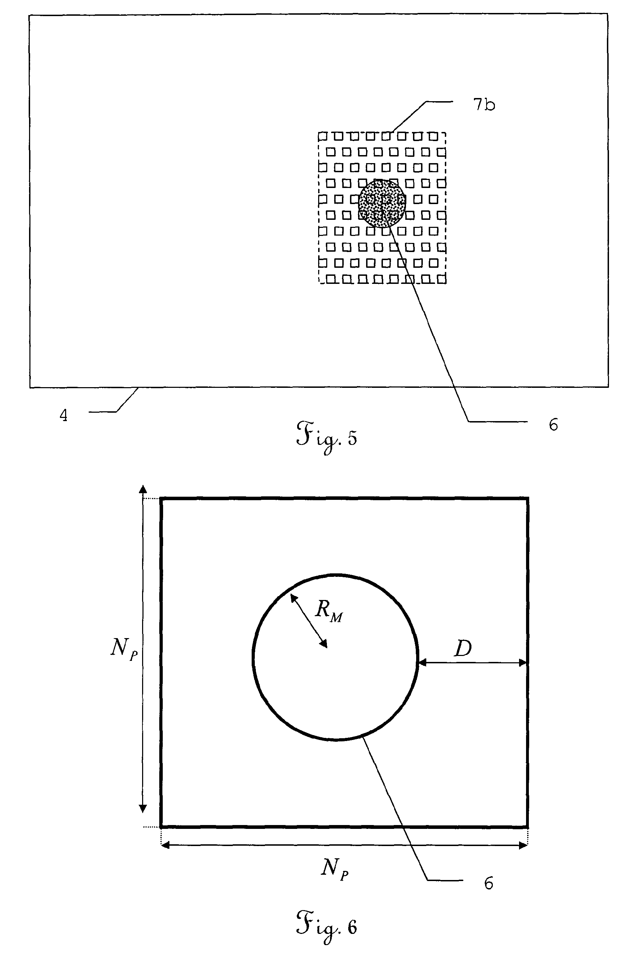

Fig.6 veranschaulicht die Berechnung der optimalen Bildauflösung am Beispiel eines Sensors mit quadratischen Bildpunkten - wie in den Fig.2 bis Fig.5 dargestellt - und gleicher Geschwindigkeitsanforderung in beiden Sensorrichtungen. Die Vorgehensweise lässt sich leicht auf rechteckige Bildpunkte und/oder verschiedene Geschwindigkeitsanforderungen verallgemeinern.

Gegeben sei eine Bildauflösung von $N_P \times N_P$ Pixeln. Der Zeitbedarf $T_M$ der Richtungsmessung ergibt sich aus der Bildauflösung typischerweise als Polynom 2. Grades mit den Koeffizienten $C_n$ :

$$T_M = C_2 N_P^2 + C_1 N_P + C_0 \tag{2}$$

Auf einem Sensorbereich mit $N_P \times N_P$ Pixeln befindet sich das Muster 6. Dessen Grenzen werden in diesem Beispiel als Kreis mit Radius $R_M$ angenommen. Möchte man während der dynamischen Messaufgabe eine kontinuierliche Richtungsmessung gewährleisten, so darf das Muster 6 während der Messzeit $T_M$ den sensitiven Bereich nicht verlassen. Somit ist die maximale Geschwindigkeit des Musters 6 auf dem Sensor:

$$V_{Max} = \frac{D}{T_M} = \frac{\frac{N_P}{2} - R_S}{C_2 N_P^2 + C_1 N_P + C_0} \tag{3}$$

Das optimale Subwindowing maximiert diese Geschwindigkeit:

$$N_{P,Opt} = \frac{2R_M C_2 + \sqrt{4R_M^2 C_2^2 + C_2 C_0 + 2R_M C_2 C_1}}{C_2} \qquad (4)$$

Wählt man die Bildauflösung $N_{P,Opt} \times N_{P,Opt}$ so liefert dies die grösstmögliche Geschwindigkeit des Musters auf dem Sensor welche noch aufeinanderfolgende Messungen zulässt. Hat sich das Muster 6 während der Messzeit die Strecke D auf dem Sensor bewegt, so kann bei anfänglich zentraler Lage des Musters 6 noch eine Messung durchgeführt werden, bevor das Gesichtsfeld des Detektors für die nächste Messung nachgeführt werden muss. Übersteigt der Wert von $N_{P,Opt}$ die Anzahl von Bildpunkten in einer Sensorrichtung, z.B. $N_{P,Opt}$ > Anzahl von Bildpunkten in der Zeile unter Berücksichtigung von evtl. Subsampling, so muss der Sensor in dieser Richtung ohne Subwindowing nachgeführt werden. In diesem Beispiel bedeutet das, dass von Zeilen, die das evtl. Zeilensubsampling vorsieht, alle Bildpunkte, die das evtl. Spaltensubsampling vorsieht, ausgewertet werden. Dies wäre auch die Vorgehensweise für den Fall von $C_2 = 0$.

Soll nur eine kontinuierliche Nachführung des Gesichtsfeldes erfolgen, so ist es oft auch möglich, die Position des Musters 6 vergleichsweise grob, z.B. mit einem zulässigen Messfehler entsprechend dem halben Detektorgesichtsfeld, zu bestimmen, wenn nur die Mitte des Musters im Gesichtsfeld des Sensors ist. Dies bedeutet, nur ein Teil der Fläche des Musters 6 ist auf dem ausgewerteten Sensorbereich. Bei dieser Aufgabenstellung ist die maximal zulässige Geschwindigkeit des Musters 6 auf dem Sensor

$$V_{Max} = \frac{\frac{N_P}{2}}{T_M} \qquad (5)$$

und damit die optimale Auflösung $N_{P,Opt} \times N_{P,Opt}$ des ausgewerteten Bildbereichs:

$$N_{P,Opt} = \sqrt{\frac{C_0}{C_2}} \qquad (6)$$

Wiederum werden, wenn $N_{P,Opt}$ grösser ist als die Anzahl der - unter Berücksichtigung des Subsamplings - auswertbaren Bildpunkte in einer Sensorrichtung, alle diese Bildpunkte ausgewertet. Das gleiche gilt für beide Sensorrichtungen, wenn $C_2 = 0$ ist.

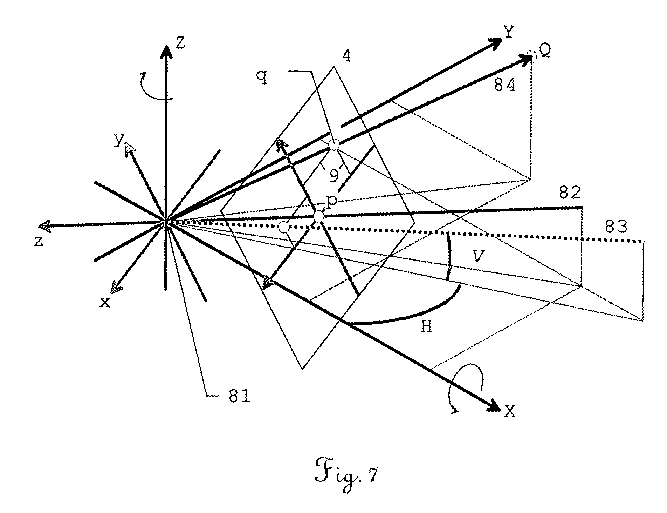

Fig. 7 zeigt das Transformationsmodell zur Transformation einer Bild-Koordinate eines Punkts q des Musters in Polarwinkel eines erfassten Objekts mit einem Objektpunkt Q. Durch dieses Transformationsmodell kann grundsätzlich die Position bzw. die Richtung eines Objektpunktes aus der Position des Musters abgeleitet werden.

Damit die Polarwinkel eines beliebigen Objektpunktes Q innerhalb des Sensorgesichtsfeldes anhand seiner Position im Muster bzw. dem Bild 4, das von dem Bildsensor erfasst wird, und somit anhand seiner Bild-Koordinate bestimmt werden können, muss eine mathematische Beschreibung der Abbildung des im Sensorgesichtsfeld befindlichen Objektes als Muster - bzw. eines Objektpunkts Q als entsprechender Punkt q im Muster - im Bild 4 bekannt sein. Im Folgenden soll die Transformation von Punkten im Bild-Koordinatensystem x, y, z in das Objektkoordinatensystem X, Y, Z anhand der Fig. 7 beschrieben werden. Die Achse Z weist in Richtung des Zenits und stellt bspw. die Stechachse eines geodätischen Messgerätes dar, die Achse X wird bspw. von der Kippachse gebildet.

Für eine vereinfachte Transformation mit beschränkter Genauigkeit können folgende Annahmen gemacht werden, wobei exemplarisch von einem geodätischen Messgerät ausgegangen wird, das bezüglich seiner Achssysteme und seines prinzipiellen Aufbaus einem Theodoliten entspricht:

- Das Projektionszentrum 81 der Abbildung der innerhalb des Sensorgesichtsfelds erfassten Objekte auf den Bildsensor liegt im Schnittpunkt von Stehachse und Kippachse.
- Die Kippachse ist senkrecht zur Stehachse.
- Die optische Achse 82 und die Theodolitenachse 83 schneiden sich im Projektionszentrum 81.

Hierbei ist die optische Achse 82 definiert als die Achse durch eine Optikeinheit und somit im wesentlichen diejenige Achse, welche durch die Zentren der Linsen geht. Die Theodolitenachse 83 ist definiert als diejenige Achse, bezüglich welcher die Verdrehwinkel um die Stehachse und die Kippachse gemessen werden. Das bedeutet, dass der Schnittpunkt der Theodolitenachse 83 mit dem Bildsensor bei einer Zweilagenmessung exakt auf den zu vermessenden Objektpunkt Q des Objekts zeigt. Dies entspricht der Zielachse bezüglich des Fadenkreuzes bei optischen Theodoliten.

Es ist jedoch auch möglich, nicht von diesen Annahmen auszugehen, sondern die Transformation entsprechend zu erweitern, wobei beispielsweise Achsfehler - insbesondere ein Achsversatz oder eine Achsschiefe - in die Transformation mit einbezogen werden. Dies sorgt für eine weitere Erhöhung der Genauigkeit der Transformation und biete sich daher besonders bei geodätischen Messgeräten höchster Präzisionsklasse an.

Die Berechnungen beschränken sich auf die Abbildung eines Objektpunktes Q in einem übergeordneten Koordinatensystem, welches horizontal ist und dessen Ursprung im Projektionszentrum 81 liegt, in die Bildebene des Bildes 4.

Eine Überführung in ein beliebiges Koordinatensystem kann mittels Verschiebung und Rotation über die bekannte Helmert-Transformation mit Massstab gleich eins durchgeführt werden.

Das Transformationsmodell zur Transformation einer Aufnahmebild-Koordinate in eine Objekt-Koordinate lautet wie folgt:

$$\mathbf{r}_q = \mathbf{r}_P + \mathbf{T}_0 \cdot \left( \frac{1}{m} \cdot \mathbf{T}_{Hz,V} \cdot \mathbf{R}_{Inc} \cdot \mathbf{r}_Q \right)$$

mit

$r_Q$      Objektvektor 84 des Punktes Q im System (X,Y,Z).

$r_q$      Vektor eines Punkts q des Musters, also des Abbildes des Objektpunkts Q auf dem Bild 4, gemessen im Bild-Koordinatensystem x, y, z. Die x- und y-Komponenten wird durch die Aufnahmebild-Koordinate 9 bestimmt. Die z-Komponente entspricht der Kammerkonstante c, die definiert ist als der Abstand des Bildsensors und somit des Bildes 4 vom Projektionszentrum 81 und somit der Eintrittspupille. Die Kammerkonstante ändert sich mit der Stellung einer Fokuslinse der Optikeinheit und ist deshalb an den Massstab gekoppelt: Kammerkonstante c = Abbildungsmassstab m * (Abstand Objekt von der Eintrittspupille).

$r_p$      Hauptpunktvektor, welcher den Schnittpunkt p von der optischen Achse 82 mit dem Bild 4 beschreibt.

$m$      Abbildungsmassstab.

$\mathbf{R}_{Inc}$      Rotationsmatrix, die die verkippte Theodolitenebene in eine Horizontalebene überführt.

$\mathbf{T}_{Hz,V}$      Transformationsmatrix welche die Orientierung der Theodolitenachse 83 basierend auf dem Horizontalwinkel H, dem Vertikalwinkeln V und den Korrekturen der Achsenfehler beschreibt.

$\mathbf{T}_0$      Matrix zur Modellierung der optischen Verzerrungen.

Fig.7 skizziert die obige Transformation des Objektpunktes $r_Q$ vom übergeordneten Koordinatensystem X, Y, Z in das Bildkoordinatensystem x, y, z. Mittels der gemessenen Neigungswinkel, des Horizontalwinkels H, des Vertikalwinkels V und der Achsenkorrekturen ist es möglich, den Objektpunktvektor $r_Q$ in das System des Bildsensors abzubilden. Die Abweichung der optischen Achse 82 von der Theodolitenachse 83 und die optischen Verzerrungen werden mittels geeigneter Transformationen und Kalibrierungen korrigiert.

Es eignen sich hier Ansätze aus der Photogrammetrie, wie zum Beispiel die aus dem Stand der Technik bekannte Modellierung nach Brown oder Bayer. Bei schmalwinkligen Systemen kann die Korrektur durch eine einfache Affintransformation modelliert werden.

In den Figuren sind die Verfahrensschritte, Gebäude und verwendeten Instrumente rein schematisch dargestellt. Insbesondere können aus den Darstellungen keine Grössenverhältnisse oder Details der Bildaufnahme bzw. Bildverarbeitung entnommen werden. Die nur exemplarisch als Bildpunkte dargestellten Punkte stehen stellvertretend auch für komplexere Strukturen bzw. eine grössere Anzahl von Bildpunkten in einem Bildsensor.

**Patentansprüche**

1. Verfahren zur Richtungsbestimmung zu einem zu vermessenden Objekt (2), unter Verwendung eines geodätischen Messgeräts (1) mit
einem Bildsensor (1a), wobei dessen Sensorgesichtsfeld (3) zumindest einen Teil des zu vermessenden Objekts (2) erfasst,
mit den Schritten

- Aufnehmen eines Bildes (4) mit Bildinformationen durch den Bildsensor (1a), wobei die Bildinformationen ein dem Objekt (2) zuordenbares Muster (6) aufweisen, dessen Position innerhalb des Bildes (4) eine Bestimmung der Richtung zum Objekt (2) ermöglicht,

- Bestimmen der Position des Musters (6) innerhalb des Bildes (4), und
- Ableiten einer dem Objekt (2) zugeordneten Richtungsinformation aus der Position des Musters (6), wobei die Richtung von einem dem Bildsensor (1a) zugeordneten Detektionspunkt zum Objekt (2) bestimmt wird,

wobei nur eine Teilmenge der Bildinformationen zur Richtungsbestimmung ausgewählt und verwendet wird.

2. Verfahren nach Anspruch 1,
**dadurch gekennzeichnet, dass**
beim Ableiten der Richtungsinformation eine Verifikation erfolgt, dass das Objekt (2) zumindest teilweise innerhalb des Sensorgesichtsfelds (3) positioniert ist.

3. Verfahren nach einem der vorangehenden Ansprüche,
**dadurch gekennzeichnet, dass**
dem Aufnehmen eines Bildes (4) und/oder dem Bestimmen der Position des Musters (6) ein Festlegen von Auswahlparametern zur Auswahl der Teilmenge von Bildinformation zugeordnet ist.

4. Verfahren nach Anspruch 3,
**dadurch gekennzeichnet, dass**
beim Festlegen von Auswahlparametern wenigstens eines der beiden folgenden Verfahren verwendet wird

- Subwindowing als Auswahl eines Teilbereichs (7a,7b) des Bildsensors (1a), insbesondere eines Teilbereichs (7a) mit einer zusammenhängenden Folge von Bildpunkten (5a),
- Subsampling als gezieltes Auslassen von Bildpunkten (5a) innerhalb des Bilds (4).

5. Verfahren nach Anspruch 4,
**dadurch gekennzeichnet, dass**
beim Subwindowing die Auswahl des Teilbereichs (7a,7b) anhand wenigstens einer der folgenden Grössen erfolgt

- Objektgrösse,
- Objektdistanz,
- Gewünschte Messgenauigkeit
- Ausdehnung des Musters (6),
- erwartete oder gemessene maximale Winkelbeschleunigung.

6. Verfahren nach Anspruch 4 oder 5,
**dadurch gekennzeichnet, dass**
beim Subsampling eine Auswahl auszulassender Bildpunkten (5a) anhand wenigstens einer der folgenden Grössen erfolgt

- Objektgrösse,
- Objektdistanz,
- Gewünschte Messgenauigkeit
- Ausdehnung des Musters (6),
- erwartete oder gemessene maximale Winkelbeschleunigung.

7. Verfahren nach einem der Ansprüche 4 bis 6,
**dadurch gekennzeichnet, dass**
beim Subsampling Spalten und/oder Zeilen des Bildsensors (1a), insbesondere in Form eines rechteckigen Teilbereichs (7a,7b) des Bildsensors (1a), ausgelassen werden.

8. Verfahren nach einem der Ansprüche 4 bis 7,
**dadurch gekennzeichnet, dass**
beim Subsampling Bildpunkte (5a) in regelmässiger oder stochastischer Folge ausgelassen werden.

9. Verfahren nach einem der vorangehenden Ansprüche,
**dadurch gekennzeichnet, dass**
dem Aufnehmen eines Bildes (4) ein Festlegen von Aufnahmeparametern zur Gewährleistung einer gewünschten Messgenauigkeit zugeordnet ist.

10. Computerprogrammprodukt mit Programmcode, der auf einem maschinenlesbaren Träger gespeichert ist, zur Durchführung des Verfahrens nach einem der Ansprüche 1 bis 9.

11. Analoges oder digitales Computer-Daten-Signal, verkörpert durch eine elektromagnetische Welle, mit einem Programmcode-Segment zur Durchführung des Verfahrens nach einem der Ansprüche 1 bis 9.

Fig. 1

Fig. 2

7a

6

4

Fig. 3

4

5b

Fig. 4

6

7b

4

6

$\mathfrak{Fig}.5$

$N_P$

$R_M$

$D$

$N_P$

6

$\mathfrak{Fig}.6$

Fig. 7

**Europäisches Patentamt**

# EUROPÄISCHER RECHERCHENBERICHT

Nummer der Anmeldung

EP 03 02 0734

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | EP 0 661 519 A (TOPCON CORP) 5. Juli 1995 (1995-07-05) * Zusammenfassung; Abbildung 2 * * Spalte 1, Zeile 6 - Spalte 2, Zeile 37 * --- | 1-11 | G01S3/784 G01C15/00 |
| Y | WO 02 069268 A (SHIMONI YAIR ;ELOP ELECTROOPTICS IND LTD (IL)) 6. September 2002 (2002-09-06) * Zusammenfassung * * Seite 3, Zeile 11 - Seite 4, Zeile 22 * * Seite 5, Zeile 14 - Zeile 25 * * Seite 7, Zeile 16 - Zeile 23 * --- | 1-5,9-11 | |
| Y | EP 0 474 307 A (PHILIPS ELECTRONICS UK LTD ;KONINKL PHILIPS ELECTRONICS NV (NL)) 11. März 1992 (1992-03-11) * Spalte 8, Zeile 33 - Zeile 45 * * Spalte 12, Zeile 22 - Zeile 38 * ----- | 6-8 | |

| RECHERCHIERTE SACHGEBIETE (Int.Cl.7) |
|---|
| G01S G01C |

Der vorliegende Recherchenbericht wurde für alle Patentansprüche erstellt

| Recherchenort | Abschlußdatum der Recherche | Prüfer |
|---|---|---|
| DEN HAAG | 26. Januar 2004 | Zaccà, F |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 03 02 0734

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-01-2004

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0661519 | A | 05-07-1995 | JP | 7198383 | A | 01-08-1995 |
| | | | CN | 1110399 | A ,B | 18-10-1995 |
| | | | DE | 69419889 | D1 | 09-09-1999 |
| | | | DE | 69419889 | T2 | 20-04-2000 |
| | | | DE | 69430397 | D1 | 16-05-2002 |
| | | | DE | 69430397 | T2 | 26-09-2002 |
| | | | EP | 0661519 | A1 | 05-07-1995 |
| | | | EP | 0874218 | A1 | 28-10-1998 |
| | | | US | 6137569 | A | 24-10-2000 |
| WO 02069268 | A | 06-09-2002 | WO | 02069268 | A2 | 06-09-2002 |
| EP 0474307 | A | 11-03-1992 | DE | 69132156 | D1 | 08-06-2000 |
| | | | DE | 69132156 | T2 | 14-12-2000 |
| | | | EP | 0474307 | A2 | 11-03-1992 |
| | | | JP | 3207461 | B2 | 10-09-2001 |
| | | | JP | 4281688 | A | 07-10-1992 |
| | | | US | 5625715 | A | 29-04-1997 |
| | | | US | 5280530 | A | 18-01-1994 |

EPO FORM P0461

Für nähere Einzelheiten zu diesem Anhang : siehe Amtsblatt des Europäischen Patentamts, Nr.12/82